# EUROPEAN PATENT SPECIFICATION

(11) **EP 2 686 709 B1**
(45) Date of publication and mention of the grant of the patent: **09.12.2020**
(21) Application number: 12718313.5
(22) Date of filing: 16.03.2012
(51) Int. Cl.: G01V 1/42, G01V 1/22

(54) **SUBSURFACE MONITORING USING DISTRIBUTED ACOUSTIC SENSORS**
UNTERIRDISCHE ÜBERWACHUNG MIT VERTEILTEN AKUSTISCHEN SENSOREN
CONTRÔLE SOUS LA SURFACE UTILISANT DES CAPTEURS ACOUSTIQUES DISTRIBUÉS

(30) Priority: 16.03.2011 GB 201104423
(43) Date of publication of application: 22.01.2014
(73) Proprietor: OptaSense Holdings Limited, Hampshire GU14 0LX (GB)
(72) Inventor: HILL, David, Winfrith Newburgh, Dorset DT2 8ZB (GB); LEWIS, Andrew, Portishead, Bristol BS20 7FS (GB)
(74) Representative: Haseltine Lake Kempner LLP
(86) International application number: PCT/GB2012/050585
(87) International publication number: WO 2012/123760

(56) References cited:
- US-A1- 2010 107 754
- US-A1- 2010 200 743
- US-A1- 2010 200 744

## Description

The present invention relates to subsurface monitoring using fibre optic distributed acoustic sensors and in particular to methods and apparatus for seismic geophysical monitoring, for example vertical seismic profiling, in wellbores.

Seismic geophysical monitoring is used in a variety of applications. For example in the oil and gas sector seismic surveys may be conducted at numerous different stages of well construction and operation. In particular, once well construction has been completed and the wells are operational there may be a desire to perform periodic seismic surveys in order to highlight any significant changes in the condition of the wells and/or the reservoir over time.

Seismic surveys may also be used for assessing reservoirs for the storage of hazardous or unwanted materials, for example in carbon dioxide sequestrations schemes. In these applications there may again be a desire to undertake periodic seismic surveys to monitor the condition of the site over time.

One type of seismic survey, known as vertical seismic profiling (VSP), involves lowering a string array of geophones down a wellbore and measuring the response to a seismic stimulus at the surface. Various types of seismic source for producing a seismic stimulus are known, for instance explosives or air guns can be used, but it is common, especially in the oil and gas industry, to use one or more truck-mounted seismic vibrators, often referred to as a Vibroseis™ truck. The seismic vibrator is capable of injecting low frequency vibrations into the earth and can apply a stimulus with a time-varying frequency sweep.

In a VSP the receivers are typically relatively close together, i.e. of the order of 15 - 25m apart and the data acquired is first arrival and reflection data from the seismic source.

By determining the response of the geophones to the acoustic stimulus, information about the reservoir and/or the borehole can be determined.

To perform a VSP survey the geophone array needs be located within a wellbore. If the wellbore is actually an operational wellbore, i.e. a production or injection well, this means that operation must be halted and geophone array located in an appropriate part of the well. The cost, inconvenience and risk of such well interventions mean that in-well geophysical monitoring is expensive and often unfeasible.

In some instances a separate observation wellbore may be drilled to allow insertion of a geophone array for geophysical monitoring without halting operation in a production or injection well. However this means that a separate observation wellbore must be drilled - which is an expensive and time-consuming operation and may not be feasible in some areas. Further, although monitoring in an observation wellbore may provide useful data, for monitoring an actual production or injection well itself it may be better to take measurements from within the wellbore being assessed.

In addition to measurements in which geophones are lowered into a well or wells, there are also instances in which geophones may be permanently installed in production or injection wells. These installations are expensive, complex, and offer even shorter arrays than conventional geophone arrays.

As mentioned, VSP typically involves lowering a geophone string array down the wellbore and measuring the response to an acoustic source which is located in a desired location and used to excite the ground. With well depths of the order of 2km or more, it is not practical to use a single geophone array to cover the entire depth of the well and multiple tool settings are required. Thus the geophone array is positioned to cover a first section of well and a survey conducted. The geophone array is then subsequently moved to cover another section of the well and the survey is repeated with the same stimulus. This is repeated until measurements have been acquired from the totality of the well. The various measurements from the different sections of the well can then be merged into a single data set for the entire well.

Merging the multiple data sets acquired at different times from different well depths does cause some problems however. First, the positions of the geophone array within the well must be controlled accurately to allow the various data sets to be merged accurately. This is not trivial. In some wells the casing diameter may vary at different depths within the well, requiring the use of different clamping mechanisms at different depths. Repositioning the geophone array within the well takes time and therefore there is a relatively long delay between acquiring a first data at one well depth and then a second data set from a different well depth. This delay means that the conditions within the well and/or reservoir may have changed to a noticeable degree between acquisition of the data sets, which can lead to artefacts in the resulting well profile and/or prevent the creation of an instantaneous well profile from the entire well.

Care must also be taken when repositioning the geophone array within the well and breakages are not uncommon.

In conventional VSP, the seismic source may remain essentially stationary, and repeated source signals are required, as the geophone array is repositioned to cover the entire well. In some types of VSP however the seismic source may then be moved to a different position and the process repeated, i.e. a series of identical seismic stimuli may be applied from the new location with the geophone array being moved between shots. The location of the seismic source may be moved away from the well in a linear or areal pattern. This type of technique includes walk-away VSP and 3D VSP. In walk-away VSP or 3D VSP, having to move the geophone array in the well to acquire data from different depths of the well for each of the multiple source locations becomes a more expensive (walk-away) or prohibitively expensive (3D VSP) proposition.

It is therefore an object of the present invention to provide geophysical monitoring which at least mitigates some of the above mentioned disadvantages. Among other things, it is desirable to provide a system that is capable of performing VSP, walk-away VSP or 3D VSP without having to move a geophone array and without prohibitive costs.

Thus, according to the present invention there is provided a method of geophysical monitoring within a wellbore according to claim 1.

The method of the present invention therefore uses fibre optic distributed acoustic sensing to detect the acoustic response from substantially the entire depth of a well in response to a seismic stimulus. The method therefore provides a single-shot method of acquiring data from the entire depth of the well, or at least the entire depth of well of interest. In other words a single shot, i.e. seismic stimulus, such as a time-varying seismic sweep, may be used and the response from the entire depth of the well detected using distributed acoustic sensing. The resulting acoustic response can be processed to provide a profile for the entire depth of the well, such as a vertical seismic profile. The data may therefore be processed to provide information related to the time of arrival of the incident seismic waves at various sensing portions of fibre and also reflections of the seismic waves. Thus a seismic profile for the entire well can be acquired using a single seismic stimulus, i.e. the profile may be based on data acquired in response to the same acoustic stimulus at the same time rather than using data acquire at different times. Thus multiple acquisitions using sensing equipment repositioned at different depths in the wellbore are not required. Further, as the optical fibre is continuous down the length of the wellbore, the problem of needing to correctly stitch data sets from different depths together is avoided. As will be explained in more detail below there may be a desire to acquire data from multiple stimuli, for instance for the purposes of data stacking and/or the purposes of moving the seismic source between stimuli (i.e. shots) to acquire better data for the area under investigation, e.g. for walk-away VSP, walk above VSP or 3D VSP. However in each case there is no need to reposition the sensing fibre between different acoustic stimuli being applied which has significant advantages.

Fibre optic distributed acoustic sensing (DAS) is a known technique, known for example from document US2010/200744, whereby a single length of optical fibre is interrogated, usually by one or more input pulses of light, to provide substantially continuous sensing of acoustic activity along its length. Optical pulses are launched into the fibre and the radiation backscattered from within the fibre is detected and analysed. By analysing the radiation Rayleigh backscattered within the fibre, the effect of acoustic signals incident on the fibre can be detected. The backscatter returns are typically analysed in a number of time bins, typically linked to the duration of the interrogation pulses, and hence the returns from a plurality of discrete sensing portions can be separately analysed. Thus the fibre can effectively be divided into a plurality of discrete sensing portions of fibre. Within each discrete sensing portion disturbance of the fibre, for instance from acoustic sources, cause a variation in the properties of radiation which is backscattered from that portion. This variation can be detected and analysed and used to give a measure of the intensity of disturbance of the fibre at that sensing portion. Whilst such sensors have principally been used to detect acoustic waves it has been found that the fibres are sensitive to any type of mechanical vibration or strain and thus provide an indication of any type of mechanical disturbance along the fibre. It has further been found that a fibre optic distributed acoustic sensor can be used to detect seismic waves including P and S waves.

Distributed acoustic sensing using coherent Rayleigh backscatter has been found to be particularly advantageous and it has been surprisingly found that such sensors can provide results comparable to geophone arrays, but other types of distributed acoustic sensing are known for instance using Raman and/or Brillouin scattering and in some application such other forms of distributed acoustic sensing may be suitable.

It should be noted that the use of fibre optic DAS in wellbores has been proposed for monitoring various steps in well formation and operation. However, the skilled person would, prior to the present invention, have considered DAS as unsuitable for providing seismic profiles.

As mentioned above DAS relies on backscattering of transmitted pulses of radiation from scattering sites with an optical fibre. Typical DAS sensors use coherent radiation and rely on interference effects to detect disturbances. The different backscatter signals from the various scattering sites of a sensing portion will interfere and produce a resultant intensity. As the distribution of scattering sites is random the resulting interference is random and the intensity variation between different sensing portions isn't of itself, much use. However a strain on a relevant section of fibre will result in a change in optical path length to at least some of the scattering sites. This will vary the phase of at least part of the scattered radiation with a consequent effect on the interference and thus intensity. Therefore by measuring the variation in intensity it is possible to get an indication of any disturbances on the fibre.

It will be appreciated however that the amount of backscattered radiation is low - optical fibre is designed to be low loss - and the backscattered light is a very low level signal. Typically there will be a noise limit below which it is difficult to detect useable information which does limit how sensitive the DAS system can be. To detect a disturbance the incident signal must create a strain on the fibre. This requires the incident wave to couple to the fibre, which will be disposed in a jacket and possibly with other fibres in a cable (designed to protect the fibre from shock damage), the cable potentially being encased in cement. There are clearly a lot of factors affecting coupling of the incident wave to the fibre and lots of opportunity for loss. It would therefore be expected that the sensitivity of the DAS sensor is relatively low - and compared to conventional geophones or seismometers this is indeed the case.

Also a typical DAS sensor relies on interference effects there is the risk of fading, i.e. the situation where the resulting interference is almost completely destructive resulting in no useable signal being detected. Small variations in strain around the faded state will result in barely detectable changes in signal. Fading can also be affected by path lengths changes due to thermal variations, in other words a portion of fibre that was giving good results may drift into a faded state over time or vice versa.

It will also be clear that DAS sensors using conventional fibre are not directionally sensitive in the sense that for any given individual sensing portion of fibre it is not possible to determine the direction of incidence of any acoustic stimulus and, in theory, a stimulus from any direction could create the same response. In some applications this can be avoided by the arrangement of the fibre path but in downhole situations the path of the fibre is generally quite constrained.

For all these reasons the skilled person would not have previously realistically considered DAS for the purposes of performing VSP. However it has surprisingly been found that DAS is suitable for producing seismic profiles and that in certain applications the results can be comparable to those obtained with geophone arrays. In particular the advantages of being able to acquire data from the whole length of a wellbore in response to a single stimulus means that multiple stimuli can be applied in a short period of time and the results from each stimulus processed together, for example using data stacking techniques.

As used in this specification the term "distributed acoustic sensor" will be taken to mean a sensor comprising an optical fibre which is interrogated optically to provide a plurality of discrete acoustic sensing portions distributed longitudinally along the fibre and which can detect mechanical vibration or incident pressure waves, including seismic waves.

Whilst the method of the present invention allows a seismic profile to be generated using a single acoustic stimulus only, as mentioned above the method also has particular advantages in terms of data stacking. Data stacking involves data from a given section of well acquired in response to multiple shots, i.e. repeated measurement from repeated seismic stimuli, being combined to try to improve signal to noise ratio. However when using geophone arrays, the need to reposition the array means that acquiring multiple data sets from multiple shots at one well depth before moving to a different well depth will lengthen the overall time difference between acquiring data from the various sections of well. Acquiring data from a series of well positions and then repeating is not typically feasible because of the many tool repositions required and the difficult in ensuring the geophone array is exactly in the same place from shot to shot. Thus there is typically a limit to the number of shots that can feasibly be acquired using a geophone array.

With the present invention, however, no tool positioning is required and the optical channels from shot to shot, which are defined by the interrogating radiation and processing, will remain in exactly the same place. Thus the method may comprise repeating the step of detecting the acoustic response from substantially the entire length of the wellbore in response to a seismic stimulus a plurality of times, i.e. performing a series of shots. These multiple shots can be acquired in a relatively short period of time. The plurality of acoustic responses may be processed to combine said acoustic responses into a single combined result and seismic stacking techniques may be applied, i.e. a series of single shot responses from the entire well may be acquired and then stacked. Thus the method may comprise acquiring data from more shots than would usually be used for performing a geophone based survey. The method may comprise repeating the step of detecting the acoustic response from substantially the entire length of the wellbore in response to a seismic stimulus more than ten times, or more than thirty times or more than fifty times. In each shot the seismic source may output substantially the same stimulus and may be located in substantially the same location. The method may comprise stacking the data from multiple different measurements to different stimuli. In each case the stimulus may have substantially the same form. The method may comprise stacking data from ten or more measurements, or thirty or more measurements or fifty or more measurements. As will be appreciated the seismic source is located outside of the wellbore to stimulate the ground surrounding the wellbore. The offset of the seismic source from the wellbore may vary. The source may be located generally above (but outside of) the wellbore to perform a zero-offset VSP. The source may alternatively have a define offset from the wellbore, i.e. the source is located a desired distance away from the head of the well bore. The offset may be several hundred metres or could be of the order of kilometres. In some applications, the optical fibre may be permanently installed. For example, the optical fibre could be located between the side of the wellbore and an outer well casing. The invention may be carried out with a removable array, but its greatest value occurs when the array is permanently in place, i.e. not having to disturb well operations. This means that the optical fibre can be used to acquire a series of seismic profiles over time. The method may therefore comprise time-lapse geophysical monitoring wherein the acoustic responses detected using said optical fibre at at least two different times are compared, e.g. comparing seismic profiles generated from the acoustic responses from different surveys at different time. Due to the costs and risks of inherent in well interventions using geophone arrays it is not generally feasible to perform lots of seismic surveys, whereas with a fibre optical permanently deployed in the well a profile can be easily acquired whenever desired. Further, ideally the acoustic responses should be measured at the same places from survey to survey. It can be very difficult to position a geophone array in the same position as a previous survey carried out weeks or months previously. With fibre optic distributed acoustic sensing however a fibre can be left in-situ from survey to survey and thus will be in exactly the same place each time a survey is performed.

The wellbore may be a production or injection well, i.e. an operational well. As the optical fibre may be deployed in a manner that does not interfere with well operation the method may be performed during normal operation of the well. This avoids the need to halt production. Even if production is temporarily halted to minimise ambient well noise, there is no need for a well intervention. The wellbore may be at least 1.5km long. Typical injection or production wells may be at least 1.5km long, and lengths of 4km or more are known. This is significantly longer than could be covered using a conventional geophone string array.

As mentioned the method may comprise stimulating the ground using a seismic source. The seismic source may provide a stimulus with a time varying frequency and the method may involve correlating the acoustic response with the time varying frequency.

The method may comprise stimulating the ground with at least one seismic source in a first location and acquiring data from the entire length of the wellbore and subsequently stimulating the ground with at least one seismic source in a second location, different to the first, and acquiring data from the entire length of the wellbore. The method may comprise acquiring a plurality of measurements from seismic sources located at a plurality of different locations. The locations may be varied over time to provide for a walk away VSP, walk-above VSP or 3D VSP to be acquired.

The method may therefore involve using a suitable seismic source, typically a surface source, to conduct a subsurface monitoring. As mentioned above distributed acoustic sensing has surprisingly been found to be able to detect the seismic signals with sufficient quality and resolution to provide data sets which are comparable to conventional geophone arrays, especially when stacking a plurality of measurement signals.

In additional however the optical fibre may be used to detect the acoustic response to other seismic events, for instance from seismic events which originate from below the surface. The method may for example comprise monitoring the acoustic signals emitted by fracturing rock in response to a natural or man-made stimulus.

In another aspect, the invention provides an apparatus for geophysical monitoring in a wellbore as defined by claim 13.

The apparatus according to this aspect of the invention offers all of the same advantages and can be used in all of the embodiments as discussed above in relation to the method. For example, the processor is configured to produce a vertical seismic profile for the wellbore.

In general, the invention resides in the use of fibre optic distributed acoustic sensing to acquire a seismic profile from substantially the entire length of a wellbore in a single shot. The invention allows collection of data from multiple shots and stacking of said data.

The invention will now be described by way of example only with reference to the following drawings, of which:
Figure 1 illustrates the basic components of a fibre optic distributed acoustic sensor;
Figure 2 illustrates deployment of a fibre optic distributed acoustic sensor in a wellbore;
Figure 3 illustrates ZO-VSP data acquired from a wellbore using both geophones and a DAS sensor and calculated velocity profiles; and
Figures 4a and 4b show WA-VSP data acquired with geophones and a DAS sensor respectively.

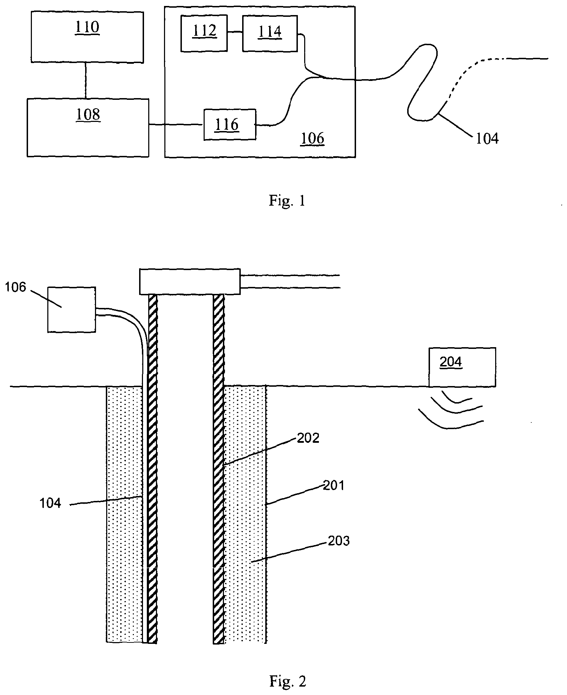

Figure 1 shows a schematic of a distributed fibre optic sensing arrangement. A length of sensing fibre 104 is removably connected at one end to an interrogator 106. The output from interrogator 106 is passed to a signal processor 108, which may be co-located with the interrogator or may be remote therefrom, and optionally a user interface/graphical display 110, which in practice may be realised by an appropriately specified PC. The user interface may be co-located with the signal processor or may be remote therefrom.

The sensing fibre 104 can be many kilometres in length and can be at least as long as the depth of a wellbore which may be at least 1.5km long. The sensing fibre may be a standard, unmodified single mode optic fibre such as is routinely used in telecommunications applications without the need for deliberately introduced reflection sites such a fibre Bragg grating or the like. The ability to use an unmodified length of standard optical fibre to provide sensing means that low cost readily available fibre may be used. However in some embodiments the fibre may comprise a fibre which has been fabricated to be especially sensitive to incident vibrations. In use the fibre 104 is deployed to lie along the length of a wellbore, such as in a production or injection well as will be described.

In operation the interrogator 106 launches interrogating electromagnetic radiation, which may for example comprise a series of optical pulses having a selected frequency pattern, into the sensing fibre. The optical pulses may have a frequency pattern as described in GB patent publication GB2 442 745. Note that as used herein the term "optical" is not restricted to the visible spectrum and optical radiation includes infrared radiation and ultraviolet radiation. As described in GB2,442,745 the phenomenon of Rayleigh backscattering results in some fraction of the light input into the fibre being reflected back to the interrogator, where it is detected to provide an output signal which is representative of acoustic disturbances in the vicinity of the fibre. The interrogator therefore conveniently comprises at least one laser 112 and at least one optical modulator 114 for producing a plurality of optical pulse separated by a known optical frequency difference. The interrogator also comprises at least one photodetector 116 arranged to detect radiation which is Rayleigh backscattered from the intrinsic scattering sites within the fibre 104.

The signal from the photodetector is processed by signal processor 108. The signal processor conveniently demodulates the returned signal based on the frequency difference between the optical pulses, for example as described in GB2,442,745. The signal processor may also apply a phase unwrap algorithm as described in GB2,442,745. The phase of the backscattered light from various sections of the optical fibre can therefore be monitored. Any changes in the effective path length from a given section of fibre, such as would be due to incident pressure waves causing strain on the fibre, can therefore be detected.

The form of the optical input and the method of detection allow a single continuous fibre to be spatially resolved into discrete longitudinal sensing portions. That is, the acoustic signal sensed at one sensing portion can be provided substantially independently of the sensed signal at an adjacent portion. Such a sensor may be seen as a fully distributed or intrinsic sensor, as it uses the intrinsic scattering processed inherent in an optical fibre and thus distributes the sensing function throughout the whole of the optical fibre. The spatial resolution of the sensing portions of optical fibre may, for example, be approximately 10m, which for a continuous length of fibre deployed down the entire length of a 4km production well say provides 400 independent acoustic channels or so deployed along the entire length of the well which can provide effectively simultaneous monitoring of the entire length of the wellbore.

As the sensing optical fibre is relatively inexpensive the sensing fibre may be deployed in a wellbore location in a permanent fashion as the costs of leaving the fibre in situ are not significant. The fibre is therefore conveniently deployed in a manner which does not interfere with the normal operation of the well. In some embodiments a suitable fibre may be installed during the stage of well constructions, such as shown in Figure 2.

Typically producing or injection wells are formed by drilling a bore hole 201 and then forcing sections of metallic casing 202 down the bore hole. The various sections of the casing are joined together as they are inserted to provide a continuous outer casing. After the production casing has been inserted to the depth required the void between the borehole and the casing is backfilled with cement 203, at least to a certain depth, to prevent any flow other than through the well itself. As shown in Figure 2 the optical fibre to be used as the sensing fibre 104 may be clamped to the exterior of the outer casing 202 as it is being inserted into the borehole. In this way the fibre 104 may be deployed in a linear path along the entire length of the wellbore and subsequently cemented in place for at least part of the wellbore. It has been found that an optical fibre which is constrained, for instance in this instance by passing through the cement back fill, exhibits a different acoustic response to certain events to a fibre which is unconstrained. An optical fibre which is constrained may give a better response than one which is unconstrained and thus it may be beneficial to ensure that the fibre in constrained by the cement. Other deployments of optical fibre may be possible however, for instance the optical fibre could be deployed within the outer casing but on the exterior of some inner casing or tubing. Fibre optic cable is relatively robust and once secured in place can survive for many years in the downwell environment.

The fibre protrudes from the well head and is connected to interrogator 106, which may operate as described above.

Interrogator 106 may be permanently connected to the fibre 104 to provide continual acoustic/seismic monitoring and may monitor a range of well operations. In some embodiments however the interrogator is removably connected to the fibre 104 when needed to perform a geophysical survey but then can be disconnected and removed when the survey is complete. The fibre 104 though remains in situ and thus is ready for any subsequent survey. The fibre is relatively cheap and thus the cost of a permanently installed fibre is not great. Having a permanently installed fibre in place does however remove the need for any sensor deployment costs in subsequent surveys and removes the need for any well intervention. This also ensures that in any subsequent survey the sensing is located in exactly the same place as for the previous survey. This readily allows for the acquisition and analysis of seismic data at different times to provide a time varying seismic analysis.

To perform geophysical monitoring, one or more seismic sources 204, for example Vibroseis™ trucks are located with a desired offset from the wellbore and used to excite the ground at the surface as illustrated in Figure 2. There may be several seismic sources exciting the ground at the same time, at the same or different locations although only one source is shown in Figure 2 for clarity.

Depending on the type of geophysical survey the seismic source 204 may apply a stimulus with a time varying frequency pattern and when analysing the data from the DAS sensor a frequency correlation may be applied to isolate the seismic signals of interest from background noise etc.

Multiple different arrangements of seismic source may be used. For example for performing a zero-offset vertical seismic profile (ZO-VSP) the seismic source may be located generally above the wellbore, but outside of the wellbore. In a Walk-away vertical seismic profile (WA-VSP) the seismic source may be progressively moved further away from the well bore. The seismic source may also be used to induce tube waves in the well casing. The different types of survey can be used to monitor different aspects of the well, for example in a carbon dioxide sequestration well a ZO-VSP may be used to monitor CO₂ containment, a WA-VSP may be used to track the CO₂ injection plume and tube wave monitoring may be used to monitor casing integrity.

The stimulus applied by the seismic source 204 may be very energetic and thus the signals incident on the potions of fibre at the top of the well will also be energetic. However the signals at deeper sections of the fibre may be significantly attenuated and may be relatively faint. Thus the DAS sensor ideally has a large dynamic range. To help cope with a wide dynamic range the sampling speed of the photodetector 116 and initial signal processing is at a high rate so as to reduce the amount of variation between any two samples. The can aid in subsequent reconstruction of the form of the incident seismic signal. However once the general form of the signal is known a high data rate may not be required and thus the signal processor 108 may decimate the processed data to reduce further processing and storage requirements. As the skilled person will appreciate the sampling speed of the backscatter signal should in general be high enough to provide the desired spatial resolution. For instance if the spatial sensing portions are 10m in length then the time between successive samples should be such that the if a first sample corresponds to backscatter from a first section of fibre then the second sample should correspond to backscatter from a second section of fibre no more than 10m away from the first section of fibre. Thus the time between samples should be no more than the time taken for light to move 20m in the fibre (i.e. the time for the interrogating radiation to move 10m further into the fibre and the backscattered light to travel the additional 10m back toward the front of the fibre). Taking the speed of light as 3 x 10⁸ms⁻¹ and the refractive index of the fibre as 1.5 this requires a sample rate of about 10MHz. In most DAS systems, to avoid the cost associated with high speed components the sample rate would be set around this minimum required rate - especially as the minimum spatial resolution is set by the form of the interrogating radiation and thus a higher sample rate would usually not lead to a better spatial resolution.

In an embodiment of the DAS sensor used in the present invention however the sample rate may be at least eight times greater than the minimum sample rate required given the size of the sensing portions. For instance the sample rate may be of the order of 80-100MHz. Each sample may therefore be processed to determine an indication of the acoustic signal, before at least some samples are combined to form a composite sample for the sensing portion. By oversampling in this way and processing the samples before combination then any very intense signals can be identified.

As will be appreciated in a DAS sensor which relies on interference a large strain may cause a variation in path length that leads to a phase change of greater than 2π. If this was to occur between samples it would be difficult to correctly determine the incident signal. This embodiment of the present invention avoids such a problem and hence improves the dynamic range of the DAS sensor.

The signals from a given shot, i.e. given form of seismic stimulus, can be detected from each of the longitudinal sensing portions of the optical fibre (assuming the signals have not been completely attenuated). Thus it is possible to receive a signal from each sensing portion of fibre along the entire depth of the well. The result will be a series of signals indicating the seismic signals detected over time in each longitudinal section of the fibre. The sensing fibre thus effectively acts as a series of point seismometers but one which can cover the entire length of the wellbore at the same time, unlike a conventional geophone array. Further as the optical fibre can be installed so as to not interfere with normal well operation no well intervention is required.

Embodiments of the present invention therefore provide the ability to monitor the response from the entire length of the wellbore, or at least as much of the wellbore as is of interest, in response to a single shot of the seismic source.

In practice, however, the seismic stimulus may be applied a plurality of times and the acoustic response from the wellbore monitored in the response to each shot. With a DAS sensor, as no tool redeployment is necessary, the repeat shots may be acquired relatively quickly. The data from each shot can then be processed using seismic stacking techniques to improve the signal to noise ratio. Thus, data from a plurality of shots using DAS can be acquired in a fraction of the time that would be needed to acquire the same number of shots from each of the different well depth positions required with conventional geophones. As the well conditions will evolve over time, the shorter time taken to acquire the data for combination the better. However for relatively stable conditions this means that many more shots can be acquired in a given time than would be the case with a conventional geophone array.

An additional advantage to leaving the fibre in situ is the ability to perform time-lapse geophysical surveys. The optical fibre will be located in the same place each time that a survey is performed and, as the position of the acoustic channels along the fibre are determined by the interrogator, the acoustic channels may have exactly the same position from survey to survey. Thus, the results of two surveys which are conducted using the same fibre but conducted at different times can be directly compared to determine any changes occurring over time. The ability to directly correlate the results of surveys conducted at different times is an advantage of using DAS sensors with permanently deployed fibres. Apart from the costs and effort involved in repeated geophone surveys, it is difficult to ensure that the geophones are located in exactly the same position in the well as the previous survey.

As mentioned above, the fibre is interrogated to provide a series of longitudinal sensing portions, the length of which depends upon the properties of the interrogator 106 and generally upon the interrogating radiation used. The spatial length of the sensing portions can therefore be varied in use, even after the fibre has been installed in the wellbore, by varying the properties of the interrogating radiation. This is not possible with a convention geophone array, where the physical separation of the geophones defines the spatial resolution of the system. The DAS sensor can offer a spatial length of sensing portions of the order of 10m which is suitable for VSPs.

To validate the use of DAS for geophysical monitoring in wellbores, various field trials have been performed. In a first trial, an optical fibre was permanently installed in an injection well in the Shell Quest Carbon Capture and Sequestration Project in Canada. This wellbore used for the trials has with a total depth of the order of 2km. Several surveillance methods were trialled, using both DAS using the installed optical fibre and a conventional geophone array inserted within the wellbore. Because of the depth of the well, the geophone array had to be repositioned at least three times to cover the totality of the well depth.

The surveys trialled included ZO-VSPs, WA-VSPs and tube wave monitoring. The WA-VSPs involved moving the seismic source up to about 9km away to test the feasibility of refraction seismic surveying.

It was found that the phase of the DAS recording is very stable and that the first arrivals are strongly observed down to the total depth of wellbore. Further strong reflections were observed.

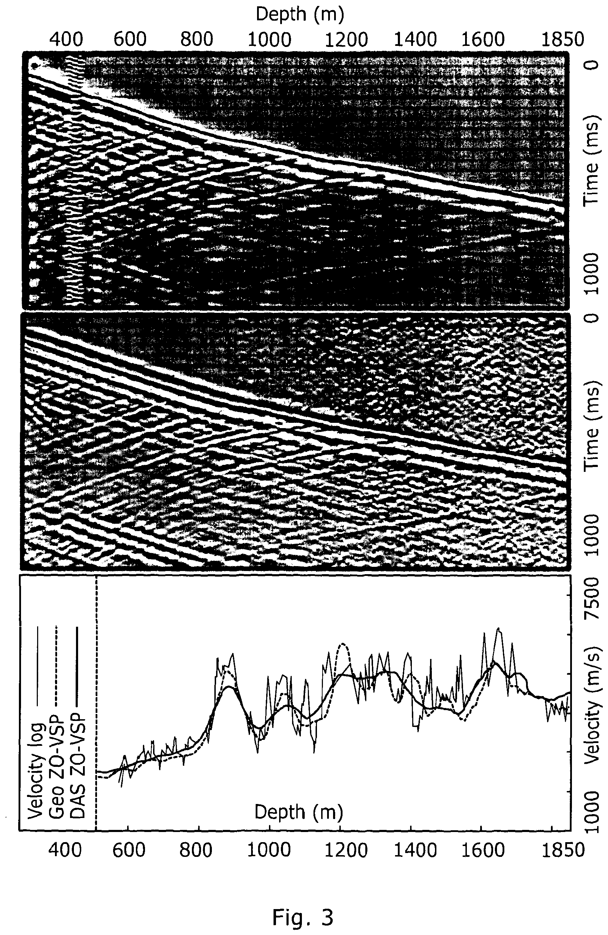

Figure 3 illustrates the ZO-VSP data with the VSP recorded using a geophone array shown in the top plot (the geophone array had a 7.5m spacing and was repositioned three times to cover the entire well) and the DAS data in the middle plot (the DAS sensor was operated with a 10m channel spacing covering the entire well).

Overall the ZO-VSP DAS recording is very comparable to the ZO-VSP geophone recording.

The ZO-VSPs were used to extract velocity profiles along the well. The first arrival times were identified and using the derivative in depth the velocity profiles shown in the lower plot were identified. The velocities calculated from the DAS data correspond well to those generated from the geophone data and also the sonic log. The geophone velocity profile does show some erroneous deviation around 1200m which is caused by the discontinuity between the three geophone array settings.

A signal to noise ration analysis was performed on the ZO data in various time windows and the signals for the DAS and geophone datasets were comparable when the spectra were normalized.

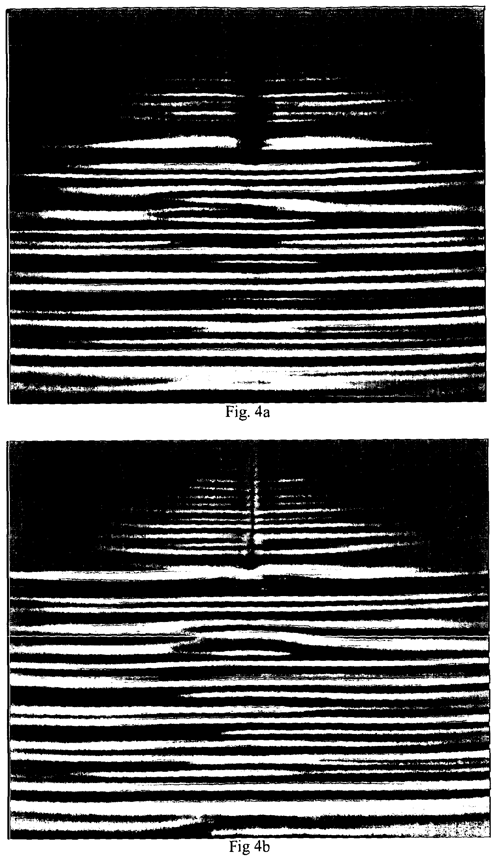

The recorded WA-VSP datasets comprised 126 levels at 15m for the geophones (two tool settings) and 177 channels at 10m for DAS. The full wave-fields were migrated resulting in the images shown in Figure 4. Figure 4a shows the geophone results and Figure 4b the DAS data. The DAS image is very comparable with the image obtained from the geophone data. Although the DAS instrument has a higher noise floor than the conventional geophone recording, the signal to noise ratio of the image is very similar after the migration since most of the incoherent noise has been stacked out.

In a second trial, an optical fibre installed in a gas production well at a test facility was used as a DAS sensing fibre. This well has a total depth of the order of 4km.

To test the signal levels over the whole well depth, a source energy penetration test was performed. Two and four synchronized Vibroseis™ trucks were employed. With two such seismic sources the first arrival signal was not observed in the deepest part of the well. However when four synchronized sources were used, the signal became visible. When multiple sweeps were performed and the result stacked, the SNR was improved after stacking 16 sweeps and stacking 32 sweeps reflections became visible in the data.

Part of the well was also outfitted with a geophone array. To cover the entire well of 4km would require multiple tool repositioning and further, as the casing diameter varies throughout the depth of the well, would require the use of different clamping tools. Thus performing a survey using geophones over the whole well depth would involve significant time and effort and the time delay between acquiring profiles at different sections of the well may be significant The DAS sensor however can monitor the entire length of the well.

The DAS recordings were compared to the relatively small section of well where the geophones were deployed and the DAS data was seen to be qualitatively similar to the geophone data. Although reflections were easier to see on the geophone data, the strongest reflection on the DAS record matches well with the geophone data. Velocity data was also determined and again there was good correspondence between the data sets.

It can therefore be see that DAS offers a viable alternative to geophones in acquiring seismic profiles and in geophysical monitoring of wellbores.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method of geophysical monitoring within a wellbore (201) comprising interrogating an optical fibre (104) deployed along substantially the entire length of the wellbore to provide distributed acoustic sensing and detecting the acoustic response from the entire length of the wellbore of interest in response to a seismic stimulus wherein interrogating said optical fibre comprises launching a series of optical pulses into said optical fibre and detecting radiation which is Rayleigh backscattered by the fibre; and processing the detected Rayleigh backscattered radiation to provide a plurality of discrete longitudinal sensing portions of the fibre and wherein the sensing fibre is free of any deliberately introduced reflection sites, **characterized in that** the profile is a vertical seismic profile and by applying seismic stacking to a plurality of acoustic responses.

2. A method as claimed in claim 1 comprising processing said acoustic response to provide a profile for the entire length of the wellbore of interest.

3. A method as claimed in claims 1 or 2 wherein the profile is a walk-away vertical seismic profile or a 3D vertical seismic profile.

4. A method as claimed in any preceding claim comprising repeating the step of detecting the acoustic response from the entire length of the wellbore of interest in response to a seismic stimulus a plurality of times.

5. A method as claimed in claim 4 comprising processing the plurality of acoustic responses to combine said acoustic responses into a single combined result.

6. A method as claimed in any preceding claim comprising comparing the acoustic responses detected using said optical fibre at at least two different times.

7. A method as claimed in claim 6 wherein comparing the acoustic responses comprises comparing seismic profiles generated from said acoustic responses.

8. A method as claimed in any preceding claim wherein the wellbore is a production well, observation well, or injection well and the method is performed during normal operation of the well.

9. A method as claimed in any preceding claim wherein the optical fibre is permanently installed in the wellbore.

10. A method as claimed in any preceding claim comprising stimulating the ground using a seismic source (204) wherein the seismic source provides a stimulus with a time varying frequency and wherein the method comprises correlating the acoustic response with the time varying frequency.

11. A method as claimed in any preceding claim comprising monitoring the acoustic response to a subsurface microseismic naturally-occurring or man-made acoustic event.

12. A method as claimed in any preceding claim wherein the wellbore is at least 1.5km long.

13. An apparatus for geophysical monitoring in a wellbore (201) comprising an optical fibre (104) deployed along the entire length of the wellbore of interest; a source of electromagnetic radiation (112, 114) configured to launch electromagnetic radiation into said fibre; a detector (116) for detecting electromagnetic radiation back-scattered from said fibre; and a processor (108) configured to analyse the back-scattered radiation according to the method of claim 1, thereby to determine a measurement signal for a plurality of discrete longitudinal sensing portions of the optic fibre and analyses said measurement signals to detect incident seismic signals, wherein the sensing fibre is free of any deliberately introduced reflection sites.

## Patentansprüche

1. Verfahren zum geophysikalischen Überwachen innerhalb eines Bohrlochs (201), umfassend ein Abfragen einer optischen Faser (104), die im Wesentlichen entlang der gesamten Länge des Bohrlochs entfaltet ist, um eine verteilte akustische Abtastung bereitzustellen, und ein Erfassen der akustischen Antwort von der gesamten Länge des Bohrlochs von Interesse als Antwort auf einen seismischen Stimulus, wobei ein Abfragen der optischen Faser ein Einleiten einer Reihe von optischen Impulsen in die optische Faser und ein Erfassen von Strahlung, die von der Faser zurückgestreut wird, umfasst; und ein Verarbeiten der erfassten zurückgestreuten Rayleigh-Strahlung, um eine Vielzahl von separaten longitudinalen Abtastabschnitten der Faser bereitzustellen, und wobei die Abtastfaser frei von absichtlich eingeführten Reflexionsstellen ist, **dadurch gekennzeichnet, dass** das Profil ein vertikales seismisches Profil ist und durch Anwenden einer seismischen Stapelung auf eine Vielzahl von akustischen Antworten.

2. Verfahren gemäß Anspruch 1, umfassend ein Verarbeiten der akustischen Antwort, um ein Profil für die gesamte Länge des Bohrlochs von Interesse bereitzustellen.

3. Verfahren gemäß Anspruch 1 oder 2, wobei das Profil ein fortgehendes vertikales seismisches Profil oder ein vertikales seismisches 3D-Profil ist.

4. Verfahren gemäß einem vorherigen Anspruch, umfassend ein mehrmaliges Wiederholen des Schritts eines Erfassens der akustischen Antwort von der gesamten Länge des Bohrlochs von Interesse als Reaktion auf einen seismischen Reiz.

5. Verfahren gemäß Anspruch 4, umfassend ein Verarbeiten der Vielzahl von akustischen Antworten, um die akustischen Antworten zu einem einzigen kombinierten Ergebnis zu kombinieren.

6. Verfahren gemäß einem vorherigen Anspruch, umfassend ein Vergleichen der akustischen Antworten, die unter Verwendung des Lichtwellenleiters zu mindestens zwei verschiedenen Zeitpunkten erfasst werden.

7. Verfahren gemäß Anspruch 6, wobei ein Vergleichen der akustischen Antworten ein Vergleichen seismischer Profile umfasst, die aus den akustischen Antworten erzeugt werden.

8. Verfahren gemäß einem vorherigen Anspruch, wobei das Bohrloch ein Produktionsbohrloch, ein Beobachtungsbohrloch oder ein Injektionsbohrloch ist und das Verfahren während des normalen Betriebs des Bohrlochs ausgeführt wird.

9. Verfahren gemäß einem der vorherigen Ansprüche, wobei die optische Faser dauerhaft in dem Bohrloch installiert ist.

10. Verfahren gemäß einem vorherigen Anspruch, umfassend ein Stimulieren des Bodens unter Verwendung einer seismischen Quelle (204), wobei die seismische Quelle einen Stimulus mit einer zeitveränderlichen Frequenz bereitstellt, und wobei das Verfahren ein Korrelieren der akustischen Antwort mit der zeitveränderlichen Frequenz umfasst.

11. Verfahren gemäß einem vorherigen Anspruch, umfassend ein Überwachen der akustischen Reaktion auf ein unterirdisches mikroseismisches, natürlich vorkommendes oder künstlich erzeugtes akustisches Ereignis.

12. Verfahren gemäß einem vorherigen Anspruch, wobei das Bohrloch mindestens 1,5 km lang ist.

13. Vorrichtung zum geophysikalischen Überwachen in einem Bohrloch (201), umfassend eine optische Faser (104), die entlang der gesamten Länge des interessierenden Bohrlochs entfaltet ist; eine Quelle elektromagnetischer Strahlung (112, 114), die konfiguriert ist, um elektromagnetische Strahlung in die Faser einzuleiten; einen Detektor (116) zum Erfassen von elektromagnetischer Strahlung, die von der Faser zurückgestreut wird; und einen Prozessor (108), der konfiguriert ist, um die zurückgestreute Strahlung gemäß dem Verfahren von Anspruch 1 zu analysieren, um dadurch ein Messsignal für mehrere separate longitudinale Erfassungsabschnitte der optischen Faser zu bestimmen und die Messsignale zu analysieren, um einfallende seismische Signale zu erfassen, wobei die Erfassungsfaser frei von absichtlich eingeführten Reflexionsstellen ist.

## Revendications

1. Un procédé de surveillance géophysique à l'intérieur d'un puits de forage (201) comprenant l'interrogation d'une fibre optique (104) déployée sensiblement le long de toute la longueur du puits de forage pour fournir une détection acoustique distribuée et la détection de la réponse acoustique à partir de toute la longueur du puits de forage d'intérêt en réponse à un stimulus sismique dans lequel l'interrogation de ladite fibre optique comprend le lancement d'une série d'impulsions optiques dans ladite fibre optique et la détection du rayonnement qui est soumis à la rétrodiffusion Rayleigh par la fibre ; et le traitement du rayonnement rétrodiffusé Rayleigh détecté pour fournir une pluralité de parties de détection longitudinales discrètes de la fibre et dans lequel la fibre de détection est exempte de tout site de réflexion délibérément introduit, **caractérisé en ce que** le profil est un profil sismique vertical et par l'application d'un empilement sismique à une pluralité de réponses acoustiques.

2. Un procédé selon la revendication 1 comprenant le traitement de ladite réponse acoustique pour fournir un profil pour toute la longueur du puits de forage d'intérêt.

3. Un procédé selon les revendications 1 ou 2 dans lequel le profil est un profil sismique vertical à déport croissant ou un profil sismique vertical 3D.

4. Un procédé selon l'une quelconque des revendications précédentes comprenant la répétition de l'étape consistant à détecter la réponse acoustique à partir de toute la longueur du puits de forage d'intérêt en réponse à un stimulus sismique une pluralité de fois.

5. Un procédé selon la revendication 4 comprenant le traitement de la pluralité de réponses acoustiques pour combiner lesdites réponses acoustiques en un seul résultat combiné.

6. Un procédé selon l'une quelconque des revendications précédentes comprenant la comparaison des réponses acoustiques détectées en utilisant ladite fibre optique à au moins deux fois différents.

7. Un procédé selon la revendication 6 dans lequel la comparaison des réponses acoustiques comprend la comparaison des profils sismiques générés à partir desdites réponses acoustiques.

8. Un procédé selon l'une quelconque des revendications précédentes dans lequel le puits de forage est un puits de production, un puits d'observation, ou un puits d'injection et le procédé est exécuté pendant le fonctionnement normal du puits.

9. Un procédé selon l'une quelconque des revendications précédentes dans lequel la fibre optique est installée de manière permanente dans le puits de forage.

10. Un procédé selon l'une quelconque des revendications précédentes comprenant la stimulation du sol en utilisant une source sismique (204) dans lequel la source sismique fournit un stimulus avec une fréquence variant dans le temps et dans lequel le procédé comprend la corrélation de la réponse acoustique avec la fréquence variant dans le temps.

11. Un procédé selon l'une quelconque des revendications précédentes comprenant la surveillance de la réponse acoustique à un événement acoustique microsismique souterrain d'origine naturelle ou humaine.

12. Un procédé selon l'une quelconque des revendications précédentes dans lequel le puits de forage a une longueur d'au moins 1,5 km.

13. Un appareil pour la surveillance géophysique dans un puits de forage (201) comprenant une fibre optique (104) déployée le long de toute la longueur du puits de forage d'intérêt ; une source de rayonnement électromagnétique (112, 114) configurée pour lancer un rayonnement électromagnétique dans ladite fibre ; un détecteur (116) pour détecter le rayonnement électromagnétique rétrodiffusé à partir de ladite fibre ; et un processeur (108) configuré pour analyser le rayonnement rétrodiffusé selon le procédé selon la revendication 1, pour déterminer ainsi un signal de mesure pour une pluralité de parties de détection longitudinales discrètes de la fibre optique et analyse lesdits signaux de mesure pour détecter des signaux sismiques incidents, dans lequel la fibre de détection est exempte de tout site de réflexion délibérément introduit.
